# FASCICULE DE BREVET EUROPEEN

(11) **EP 2 058 192 B1**
(45) Date de publication et mention de la délivrance du brevet: **12.01.2011**
(21) Numéro de dépôt: 08019340.2
(22) Date de dépôt: 05.11.2008
(51) Int. Cl.: B60T 11/236, F16J 15/32

(54) **MaÎtre-cylindre à join d'étancheité en forme de U**
Hauptzylinder mit Dichtung in U-Form
Master cylinder with U-shaped gasket

(30) Priorité: 06.11.2007 FR 0707812
(43) Date de publication de la demande: 13.05.2009
(73) Titulaire: Robert Bosch GmbH, 70442 Stuttgart (DE)
(72) Inventeur: Lacroix, Stéphane, 77220 Tournan en Brie (FR); Noblet, Marc, 75012 Paris (FR); Quiniou, Nicolas, 93250 Villemongle (FR); Brahmi, Omar, Downtown Suzhou Suzhou Jiangsu 215006 (CN); Bourgois, Lionel, 95360 Montmagny (FR); Auguste, Antony, 94350 Villier sur Marne (FR); Grech, Daniel, 60260 Lamorlaye (FR)
(74) Mandataire: Hurwic, Aleksander Wiktor

(56) Documents cités:
- EP-A- 1 616 768
- WO-A-2005/019007
- FR-A- 2 863 996

## Description

L'Invention se rapporte à un maître cylindre à joint d'étanchéité en forme de U. L'invention a pour but d'améliorer l'efficacité des purges de système de freinage hydraulique ayant un tel maître cylindre. L'invention est plus particulièrement destinée au domaine de l'automobile mais pourrait s'appliquer dans d'autres domaines.

Il est connu notamment de FR 2 863 996 des maîtres cylindres comportant un corps de maître cylindre, un piston, un réservoir de liquide de frein, ou plus généralement de fluide hydraulique, et une chambre de pression. Le piston coulisse dans un alésage formé dans le corps du maître cylindre. La chambre de pression est reliée au réservoir de fluide hydraulique via un conduit de fluide hydraulique.

Le maître cylindre comporte un joint d'étanchéité qui permet la montée en pression dans la chambre de pression. Ce joint d'étanchéité est situé entre une paroi délimitée par l'alésage du corps du maître cylindre et le piston. Ce joint bloque le passage du fluide hydraulique depuis la chambre de pression jusque dans le réservoir de fluide hydraulique. Ce blocage du passage du fluide hydraulique s'effectue en fonction de la position du piston dans l'alésage du maître cylindre. Ce joint est logé dans une gorge périphérique.

La gorge périphérique est creusée dans la paroi du corps du maître cylindre. Cette gorge est cylindrique circulaire et en regard du piston.

Le joint est réalisé en caoutchouc et possède un profil en forme de U. Le profil comporte une base, le bas du U, à laquelle sont reliés deux lèvres, les jambes du U. Ces deux lèvres s'étendent depuis cette base dans un même sens.

Une première lèvre, située à l'intérieur, est destinée à être en regard du piston. Cette lèvre s'étend depuis le plus petit diamètre de la base du joint. Cette lèvre intérieure est en appui contre le piston.

Une deuxième lèvre, située à l'extérieur, est destinée à être en regard de la paroi du corps du maître cylindre. Plus particulièrement, cette deuxième lèvre est destinée à être en regard de la paroi de la gorge périphérique opposée au piston par rapport au joint. Cette paroi est formée par le fond de la gorge. La deuxième lèvre s'étend depuis le plus grand diamètre de la base du joint. La lèvre extérieure est en appui contre le fond de la gorge.

Au repos, c'est-à-dire lorsqu'une pédale de frein du véhicule n'est pas actionnée, la chambre de pression est remplie de fluide hydraulique provenant du réservoir. Le réservoir et la chambre de pression communiquent alors via un conduit de passage de fluide hydraulique.

Quand le piston est avancé dans l'alésage du corps du maître cylindre, c'est-à-dire lorsque la pédale de frein est actionnée, l'écoulement du fluide hydraulique en provenance de la chambre de pression dans le réservoir est bloqué. En effet, en avançant le long de la paroi du corps du maître cylindre, le piston est positionné par rapport au joint de telle manière que le joint bloque le passage du fluide hydraulique depuis la chambre de pression jusque dans le réservoir. Le fluide hydraulique dans la chambre de pression est alors isolé du fluide hydraulique contenu dans le réservoir. L'avancée du piston fait alors monter la pression à l'intérieur de la chambre de pression. Il s'ensuit que le fluide hydraulique est injecté depuis la chambre de pression dans le dispositif de freinage du véhicule.

Durant une purge du système hydraulique de freinage, le circuit de freinage est, la sortie du maître cylindre est libre. Le fluide hydraulique expulsé est récupéré dans un récipient ouvert placé en position adéquate. Pour faciliter cette purge, des applications pédale brusques sont pratiquées. Ces applications pédale vont forcer le piston à faire des aller-retour de la position de repos à la position avancée. Ces applications pédale ont pour but d'évacuer le liquide à purger ainsi que les éventuelles bulles d'air présentes dans le système de freinage hydraulique.

Au cours des déplacements du piston le long de la paroi du maître cylindre, durant une purge, une dépression va se créer dans la gorge périphérique où est positionné le joint. Cette dépression va se créer suite aux brusques avancées du piston dans l'alésage. Cette dépression va engendrer un décollement des lèvres du joint par rapport aux paroi sur lesquelles elles sont respectivement appuyées. Ce décollement peut, dans certains cas, engendrer un rapprochement des lèvres entre elles et des lèvres contre la paroi en regard d'un chant de ces lèvres. La lèvre intérieure et la lèvre extérieure vont se coller l'une contre l'autre. Les deux jambes du U viennent au contact l'une de l'autre par leur extrémité. Un vide va alors se créer entre les lèvres du joint dans le U ainsi refermé. Ce vide force les lèvres à rester collées entre elles lors du retour du piston en position de repos. Ce vide est irréversible puisque, lors de la disparition de la dépression dans la gorge, au mieux, le fluide hydraulique qui revient force les deux lèvres à rester collées l'une contre l'autre. Ainsi déformé, le joint ne joue plus son rôle.

Par ailleurs, un vide peut aussi se créer entre les lèvres et la paroi sur laquelle le chant des lèvres est collé. Ce vide force aussi les lèvres à rester collées à la paroi de la gorge en regard du chant des lèvres lors du retour du piston en position de repos. Le joint n'assure alors plus non plus son rôle de joint d'étanchéité. Le fluide hydraulique contenu dans la chambre de pression peut alors s'insinuer entre la paroi de corps du maître cylindre et le piston jusqu'au réservoir de fluide hydraulique.

Pour éviter ce défaut d'étanchéité, il ne reste qu'a réaliser une purge avec un débit et une vitesse pédale limités, sinon les joints n'assurent plus leur rôle de blocage du passage de fluide hydraulique depuis la chambre de pression jusqu'au réservoir de fluide hydraulique. On comprend qu'une telle purge est rendue beaucoup plus délicate. L'opérateur doit être formé en conséquence. Cette formation est une sujétion gênante.

On peut, pour essayer d'empêcher le collage des lèvres, augmenter la rigidité des lèvres. On peut, pour cela, intégrer par exemple une armature interne dans les lèvres. De tels joints à armature pourraient être réalisés par un procédé de double moulage. Cependant, cela engendre une fabrication complexe et un surcoût non négligeable.

Une autre solution pourrait consister à créer des conduits de passage faisant communiquer l'extérieur des lèvres et l'intérieur des lèvres. Ces conduits de passage permettraient d'empêcher le vide de se créer entre les lèvres et entre les lèvres et la paroi lors des applications pédales. Cependant cette solution réduit l'étanchéité des lèvres et donc le joint ne remplit plus sa fonction de manière satisfaisante. De plus, de tels conduits de passage fabriqués dans un joint de cette taille ont tendance à fragiliser la structure du joint. Ces solutions ne sont donc pas acceptables pour résoudre le problème en l'état.

Pour résoudre ce problème, dans l'invention, des reliefs selon la revendication 1 sont prévus pour éviter la création du vide entre les deux lèvres. Ainsi, lors du rapprochement des lèvres, le collage entre les lèvres ne peut être réalisé hermétiquement car les reliefs empêchent une jointure parfaite des lèvres entre elles et avec la paroi en regard du chant des lèvres. Ce collage non hermétique évite la création du vide. Le vide qui pourrait se créer dépression entre les deux lèvres est évacué grâce à un espace de communication entre l'extérieur des lèvres et l'intérieur des lèvres, cet espace étant formé grâce aux reliefs.

L'invention est bien entendu applicable dans le cas d'un maître cylindre ayant plusieurs joints de ce type intégré. De plus l'invention est applicable à tout types de maître cylindre, y compris les maîtres cylindre tandem.

L'invention a donc pour objet un maître cylindre de frein comportant un piston coulissant dans une chambre d'un corps cylindrique de frein, le corps comportant une arrivée de fluide hydraulique dans la chambre, et un joint d'étanchéité lisse ayant une forme circulaire et une profil en U, le profil en U étant formé par une lèvre intérieure et une lèvre extérieure du joint d'étanchéité, le joint étant en contact par la lèvre intérieure avec la périphérie du piston, et par la lèvre extérieure avec le corps, caractérisé en ce qu'il comporte des reliefs localisés réalisés sur une lèvre.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : Une vue en coupe longitudinale d'un maître cylindre, ici tandem, muni de joints d'étanchéité selon l'invention ;
- Figure 2 : Une vue en coupe longitudinale d'une partie d'un maître cylindre, ici tandem, équipé d'un joint connu au repos ;
- Figure 3 : Une vue en coupe longitudinale d'une partie d'un maître cylindre, ici tandem, équipé d'un joint connu durant une purge ;
- Figure 4 : Une vue en perspective schématique d'un joint d'étanchéité selon l'invention ;
- Figure 5 : Une en perspective schématique d'une variante du joint d'étanchéité, selon l'invention.

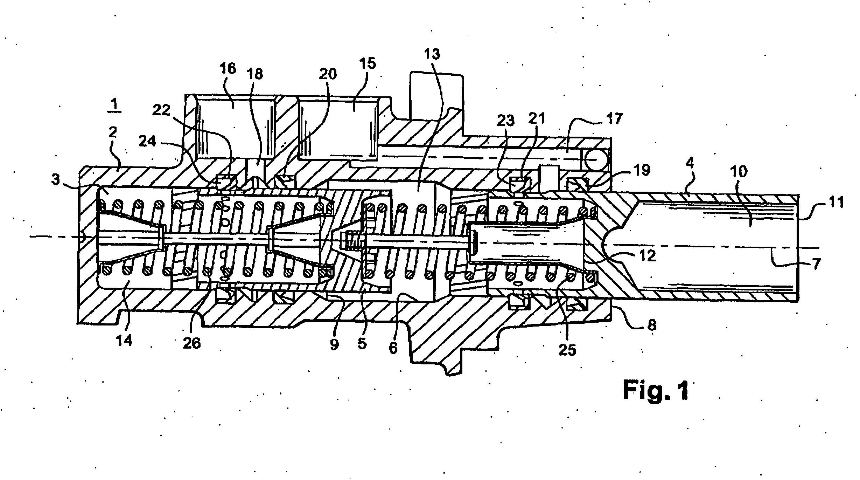

La figure 1 représente une vue en coupe longitudinale d'un maître cylindre 1, ici tandem, muni de joints d'étanchéité selon l'invention. Le maître cylindre 1 est ici un maître cylindre tandem mais l'invention est bien entendu applicable au cas où le maître cylindre est simple. Un tel maître cylindre tandem 1 comporte un corps 2 creusé d'un alésage 3. Ce maître cylindre tandem comporte également un circuit hydraulique primaire muni d'un piston primaire 4 et un circuit hydraulique secondaire muni d'un piston secondaire 5. Le piston primaire 4 et le piston secondaire 5 coulissent le long d'une paroi 6 délimitée par l'alésage 3 du corps 2. Le piston primaire 4 et le piston secondaire 5 coulissent longitudinalement le long d'un axe d'insertion 7 d'une tige de poussée (non représentée ici) à l'intérieur du maître cylindre 1. Le maître cylindre tandem 1 est actionné par la tige de poussée qui est elle-même actionnée lorsque l'on appuie sur une pédale de frein (non représentée ici). Un réceptacle 10 accueille cette tige de poussée. Ce réceptacle 10 est formé à une extrémité arrière 11 du piston primaire 4. Une extrémité avant 12 du piston primaire est destinée à être placée en regard du piston secondaire 5. Normalement, l'axe 7 est un axe qui se confond avec un axe de déplacement du piston primaire 4 et avec un axe de déplacement du piston secondaire 5.

Le piston primaire 4, le piston secondaire 5 et la paroi 6 du maître cylindre délimitent une chambre de pression primaire 13. Le piston secondaire 5 et la paroi 6 du maître cylindre 1 délimitent une chambre de pression secondaire 14. Le piston primaire 4 est destiné à comprimer un fluide hydraulique contenu dans la chambre de pression primaire 13. Le piston secondaire 5 est destiné à comprimer un fluide hydraulique contenu dans la chambre de pression secondaire 14.

Le fluide hydraulique contenu dans la chambre de pression primaire 13 provient d'un réservoir de fluide hydraulique primaire 15. Le fluide hydraulique contenu dans la chambre de pression secondaire 14 provient d'un réservoir de fluide hydraulique secondaire 16. Le réservoir primaire 15 alimente en fluide hydraulique la chambre de pression primaire 13 via un conduit primaire 17. Le réservoir secondaire 16 alimente en fluide hydraulique la chambre de pression secondaire 14 via un conduit secondaire 18. Le conduit primaire 17 et le conduit secondaire 18 sont creusés dans le corps 2 du maître cylindre et débouchent respectivement dans la chambre de pression primaire 13 et dans la chambre de pression secondaire 14. Le corps du maître cylindre 1 comporte dons des arrivées de fluide hydraulique dans les chambres de pression 13 et 14.

Le maître cylindre 1 comporte également au moins un joint d'étanchéité. Préférentiellement, chaque chambre peut comporter deux joints d'étanchéité. Ces joints d'étanchéité sont réalisés en caoutchouc. Chacun de ces joints d'étanchéité a un profil en forme de U. Chacun de ces joints forme un anneau cylindrique. Chaque anneau se développe sur un plan perpendiculaire à l'axe 7 de déplacement du piston.

lci, la chambre primaire 13 comporte un premier joint d'étanchéité 19 et un deuxième joint d'étanchéité 21. La chambre secondaire 14 comporte un troisième joint d'étanchéité 20 et un quatrième joint d'étanchéité 22. L'invention vise l'un quelconque de ces joints, ou plusieurs ou tous.

Le joint 19 et le joint 20 sont disposés respectivement à une entrée 8 de la chambre primaire 13 et à une entrée 9 de la chambre secondaire 14. Le joint 19 assure l'étanchéité de la chambre primaire 13 vis-à-vis de l'extérieur du maître cylindre. Le joint 20 assure l'étanchéité de la chambre secondaire 14 vis-à-vis de la chambre primaire 13.

Le joint 21 est disposé entre la paroi 6 de l'alésage 3 du corps 2 et le piston primaire 4. Le joint 22 est disposé entre la paroi 6 de l'alésage 3 du corps 2 et le piston secondaire 5. Le joint 21 et le joint 22 sont situés respectivement dans une gorge périphérique primaire 23 et dans une gorge périphérique secondaire 24. Le joint 21 et le joint 22 sont placés respectivement en regard du piston primaire 4 et du piston secondaire 5. La gorge primaire 23 et la gorge secondaire 24 sont creusées dans la paroi 6 du corps 2. Ces gorges 23 et 24 sont cylindrique et en regard du piston. Les gorges 23 et 24 sont creusée en regard du piston. Une génératrice des gorges 23 et 24 est située dans un plan perpendiculaire à l'axe de déplacement du piston primaire 4.

Le joint primaire 21 permet de bloquer le passage du fluide hydraulique depuis la chambre de pression primaire 13 jusque dans le réservoir primaire 15. Le joint secondaire 22 permet de contrôler le passage du fluide hydraulique depuis la chambre de pression primaire 14 jusque dans le réservoir secondaire 16.

Le piston primaire 4 et le piston secondaire 5 sont ramenés en position de repos respectivement par un ressort de rappel primaire 25 et par un ressort de rappel secondaire 26.

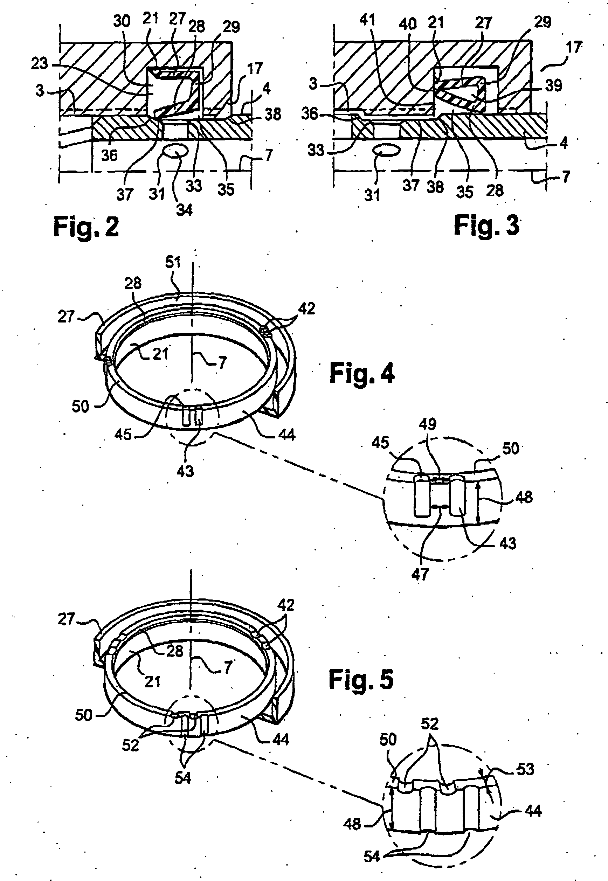

La figure 2 est une vue en coupe longitudinale d'une partie d'un maître cylindre, ici tandem, 1 équipé d'un joint 21 connu au repos.

Le joint primaire 21 est ici réalisé en caoutchouc et possède un profil en forme de U. Le joint primaire 21 est positionné autour de l'axe de déplacement du piston primaire 4. Le profil comporte une base 29, le bas du U, à laquelle sont reliés deux lèvres 27 et 28, les jambes du U. Ces deux lèvres 27 et 28 s'étendent depuis cette base 29 dans un même sens. La lèvre externe 27 et la lèvre interne 28 délimitent entre elles au repos une ouverture 30. Cette ouverture 30 est ici dirigée vers la chambre secondaire 14.

Une première lèvre 27, située à l'extérieur, est destinée à être en regard de la paroi 6 du corps 2 du maître cylindre 1. Plus particulièrement, cette deuxième lèvre 27 est destinée à être en regard de la paroi de la gorge primaire 23 opposée au piston 4 par rapport au joint 21. Cette paroi est formée par le fond de la gorge 23. La lèvre extérieure 27 s'étend depuis le plus grand diamètre de la base 29 du joint. La lèvre extérieure 27 est en appui contre le fond de la gorge 23.

Une deuxième lèvre 28, située à l'intérieur, est destinée à être en regard du piston 4. Cette lèvre s'étend depuis le plus petit diamètre de la base 29 du joint primaire 21. Cette lèvre intérieure 28 est en appui contre le piston 4. Plus précisément, au repos, la lèvre interne 28 peut être placée en appui contre un endroit du piston primaire 4 de telle manière que le fluide hydraulique s'insinue depuis la chambre de pression primaire 13 jusque dans le réservoir primaire 15 au travers d'un orifice primaire 31. Le piston primaire 4 et le piston secondaire 5 sont munis d'un orifice primaire 31 et d'un orifice secondaire 32 respectivement. Chacun de ces orifices débouche par une première extrémité 33 en regard de la paroi 6 du maître cylindre et par une deuxième extrémité 34 en regard de la chambre correspondante.

Le collage du joint primaire 21 sur le piston primaire 4 peut s'effectuer à l'intérieur d'une rainure 35. Cette rainure est ici creusée sur une surface du piston primaire 4 en regard du joint 21. Il peut en être de même pour le piston secondaire 5. Seule la rainure primaire 35 est décrite.

Le piston primaire 4 est positionné dans l'alésage avec l'extrémité de la lèvre interne 28 du joint primaire 21 opposée à la base 29 du joint primaire 21 placée en appui contre une rainure 35. L'appui de la lèvre intérieure 28 dans la rainure 35 peut se faire sur le fond de la rainure 35. Une autre rainure primaire (non représentée) pourrait être réalisée à un endroit proche du joint 19 en plus ou à la place de la rainure primaire 35 précédente.

La rainure primaire 35 forme une première surface 36, une deuxième surface 37 et une troisième surface 38 reliées entre elles en continu. La première surface 36 est réalisée continue et plane de manière inclinée par rapport à l'axe 7. Cette inclinaison est telle que la jonction entre la surface 36 et le reste de la surface formée par le piston primaire 4 est plus proche du piston secondaire 5 que la jonction de la surface 36 et la surface 37. Cette surface est proche du piston secondaire 5 par rapport aux surfaces 37 et 38. La deuxième surface 37 est plane et relativement parallèle à l'axe 7. La surface 37 est située entre la surface 36 et la surface 38. La troisième surface 38 est réalisée de manière continue et plane de manière inclinée par rapport à l'axe 7. Cette surface 38 relie la deuxième surface 37 à un reste de la surface formée par le piston primaire 4. L'inclinaison de la surface 38 est telle que la jonction entre les surfaces 37 et 38 est plus proche du piston secondaire 5 que la jonction entre la surface 38 et le reste de la surface formée par le piston primaire 4. L'inclinaison des surfaces 36 et 38 est réalisée de manière à ce que l'appui sur ces surfaces 36 et 38 du joint primaire 21 n'entrave pas le déplacement du piston primaire 4.

Au repos, c'est à dire lorsque la pédale de frein n'est pas actionnée, le joint primaire 21 est placé en appui contre la rainure 35 en aval de l'orifice primaire 31. L'orifice primaire 31 peut être creusé à partir de la deuxième surface 37 de la rainure. Le joint primaire 21 peut être positionné en appui contre la première surface 36 et contre la deuxième surface 37 en même temps. Ou bien le joint primaire 21 peut être positionné en appui contre la première surface 36 seulement ou contre la deuxième surface 37 seulement. Le piston primaire 4 est positionné par rapport au joint primaire 21 et au conduit primaire 17 de telle manière que le fluide hydraulique s'écoule depuis la chambre de pression primaire 13 en direction du réservoir primaire 15 via l'orifice primaire 31 et via le conduit primaire 17.

Lors d'une purge, le piston primaire 4 s'enfonce de manière brusque dans l'alésage 3 du maître cylindre en direction du piston secondaire 5 et longitudinalement par rapport à l'axe du piston primaire 4. Le piston primaire 4 glisse le long de la paroi 6 de l'alésage 3 du maître cylindre et donc le long du joint primaire 21. Le joint primaire 21 est alors positionné en appui contre le piston primaire entre l'orifice primaire 31 et le conduit primaire 17. Le joint primaire 21 est placé en amont de l'orifice primaire 31, longitudinalement par rapport à un axe passant par l'orifice primaire et relativement parallèle à l'axe du piston, selon la direction d'avancée du piston primaire. Le fluide hydraulique ne peut plus passer au travers de l'orifice primaire 31 parce que le joint primaire 21 est placé en appui contre le piston primaire et obstrue donc l'accès du liquide au travers de l'orifice primaire 31. Il se produit une montée en pression dans la chambre primaire 13. Le joint primaire 21 est placé en appui contre le reste de la surface du piston primaire 4. Mais le joint primaire 21 pourrait être placé en appui contre la deuxième ou la troisième surface de la rainure primaire 35, toujours de manière à bloquer le passage du fluide hydraulique de la chambre de pression primaire 13 au réservoir primaire 15.

La figure 3 est une vue en coupe longitudinale partielle d'un maître cylindre, ici tandem, équipé d'un joint connu durant une purge. Durant une purge du système hydraulique, les applications pédales entraînent des déplacements brusque du piston primaire 4 en direction de la chambre primaire 13. Ces brusques avancées du piston primaire 4 créent une dépression dans la gorge 23. Cette dépression aspire le fluide hydraulique contenu entre les lèvres 27 et 28 entraînant une dépression entre les lèvres 27 et 28. La dépression entre les lèvres 27 et 28 entraîne un décollement des lèvres 27 et 28 par rapport à leur parois d'appui. Les lèvres 27 et 28 se collent l'une conte l'autre. Un vide 39 se crée entre les paroi des lèvres en regard l'une de l'autre. Ce vide maintient les lèvres 27 et 28 collées entre elles.

Un vide 40 peut aussi se créer entre le chant des lèvres 27 et 28 et la paroi 41 en regard du chant des lèvres 27 et 28. Ce vide 40 maintient les lèvres 27 et 28 collées contre la paroi 41.

Lors du retour du piston primaire 4 en position de repos, la dépression qui s'est crée dans la gorge 23 disparaît grâce à la remise en contact des fluides hydrauliques contenus dans le réservoir 15 et dans la chambre 13. Cependant les vides 39 et 40 maintiennent toujours les lèvres bloquées entre elles et contre la paroi. De plus, la différence de pression entre l'intérieur de la gorge 23, revenue à une pression normale grâce à la disparition de la dépression qu'elle abritait, et les vides 39 et 40 maintient d'autant plus les lèvres 27 et 28 collées entre elles et contre la paroi 41. Dans cette position, la joint 21 n'assure plus de manière efficace son rôle de joint d'étanchéité entre le réservoir primaire 15 et la chambre primaire 13. Cette jointure n'ayant plus lieu, la purge est bien moins efficace, voir impossible.

La figure 4 représente une vue en perspective schématique d'un joint 21 d'étanchéité selon l'invention. Un tel joint peut être situé aussi bien sur un maître cylindre simple qu'un maître cylindre tandem. Selon l'invention, les lèvres d'un joint d'étanchéité 21 sont munies de reliefs 42. Une représentation particulière, selon la figure 4, de ces reliefs 42, se présente sous la forme de protubérances 43, des nervures 43. Ces reliefs peuvent cependant, comme nous le verront par la suite, se présenter sous la forme de creux.

Les nervures 43 s'étendent, selon la figure 4, sur la surface 44 de la lèvre intérieure 28 en regard de la lèvre extérieure 27. Ces nervures 43 s'étendent suivant un axe parallèle à l'axe de déplacement du piston, en continu sur au moins toute la hauteur de la lèvre intérieure 28. En outre ces nervures 43 peuvent se prolonger en formant un picot 45 sur le chant 50 de la lèvre intérieure 28.

De telles nervures 43 empêchent la lèvre intérieure 28 de se coller de manière étanche contre la lèvre extérieure 27 grâce à la non complémentarité des formes de la lèvres extérieure 27 et des nervures 43. Le collage entre la lèvre intérieure 28 et de la lèvre extérieure 27 lors d'une purge ne s'effectuant plus de manière étanche, le vide 39 entre ces deux lèvres 27 et 28 lors des applications pédales ne se crée plus. Les deux lèvres 27 et 28 ne reste plus alors collées entre elles.

De la même manière, la présence des picots 45 sur le chant de la lèvre intérieure 28 évite un collage étanche des lèvres 27 et 28 par rapport à la paroi 41 pour les mêmes raisons de non complémentarité des formes entre les picots 45 et la paroi 41. Un espace existe alors entre la paroi 41 et la lèvre intérieure 28. Cet espace empêche la création d'une dépression, le vide 40, entre les lèvres et la paroi 41.

Les différences de pression entre l'intérieur des lèvres et l'extérieur des lèvres disparaissent alors. Les lèvres 27 et 28 peuvent reprendre une position libre et remplir efficacement leur rôle d'étanchéité. La purge du système hydraulique de freinage peut se faire dans des conditions optimales.

Le nombre de reliefs 42 présent peut varier. Avec une seule nervure 43 cependant, le conduit de passage qui permet d'éviter le vide est limité. Cet unique conduit de passage évacue lentement la pression. Le joint 21 met plus de temps à revenir en position. La présence de 6 ou 8 nervures 43 est suffisant pour assurer une évacuation rapide et efficace de la pression. La lèvre intérieure 28 comporte ici 6 nervures 43.

Les reliefs 42 peuvent être répartis en groupements. Les nervures 43 sont, sur la figure 4, positionnées par couple sur la partie extérieure 44 de la lèvre intérieure 28. Pour chaque couple de reliefs 42, l'espace 47 séparant les deux reliefs est, par exemple, égal à deux fois la hauteur 48 de la lèvre intérieure, mesurée dans le sens de déplacement du piston.

La présence de couples de nervures assure un meilleur espace de circulation quand les lèvres viennent à se coller. En effet, le faible espace séparant les deux nervures 43 empêche les lèvres de se coller entre elles à l'intérieur de cet espace 47. De la même manière l'espace 49 entre les picots 45 empêche les lèvres de se coller de manière étanche à la paroi 41 à l'intérieur de cet espace 49. Ces espaces permettent d'assurer un retour dans une position de purge plus rapide et donc une qualité de purge supérieure.

La figure 4 représente un joint 21 sur lequel les nervures 43 sont continues du chant 50 de la lèvre intérieure 28 à la paroi 44 de la lèvre intérieure 28 en regard de la lèvre extérieure 27. Cependant, les reliefs 42 peuvent être situés sur la paroi de n'importe quelle lèvre en regard de l'autre lèvre. Ainsi, les nervures 43 peuvent être situées sur la paroi 51 lèvre extérieure 27 en regard de la lèvre intérieure 28 selon le même procédé.

Selon la figure 4, les reliefs 42 sont continus du chant de la lèvre à une paroi de la lèvre en regard de l'autre lèvre. Selon une autre représentation de l'invention, les nervures 43 présentes sur les lèvres et les picots 45 présents sur le chant des lèvres peuvent être indépendants. Une telle indépendance permet de placer librement les picots 45 sur le chant des lèvres, en les positionnant par exemple excentrés par rapport aux nervures 43.

La figure 5 représente une vue en perspective schématique d'un joint 21 d'étanchéité selon l'invention. Selon l'invention, les reliefs 42 présents sur une lèvre du joint 21 peuvent avoir une forme de creux. Ici, ces creux se présentent sous la forme de rainures 52 pratiquées sur le chant 50 de la lèvre intérieure 28. Ces rainures 52 s'étendent sur toute l'épaisseur 53 du chant 50 de la lèvre intérieure 28 assurant un couloir de régulation de la pression entre l'espace entre les lèvres et la paroi 41. En outre des rainures 54 peuvent être pratiquées sur la paroi extérieure 44 de la lèvre intérieure 28. Ces rainures 54 s'étendant sur toute la hauteur 48 de la lèvre intérieure 28 permettent de réguler la pression entre les lèvres et d'éviter ainsi la création d'un vide 39 les maintenant collées l'une à l'autre lors de la purge.

Sur la figure 5, les rainures 52 et les rainures 53 sont indépendantes, cependant, comme pour les reliefs en forme de nervures, les rainures 52 et 54 peuvent se situer dans la continuité l'une de l'autre.

Les rainures 52 situées sur le chant 50 de la lèvre intérieure 28 n'empêchent pas le joint 21 de remplir son rôle d'étanchéité. En effet, la surface de la paroi 41 située sous les rainures 52 continue à jouer son rôle d'étanchéité en s'appuyant sur le piston 4, les rainures 52 étant juste assez profonde pour permettre à la pression de se réguler sans empêcher la lèvre intérieure 28 de jouer son rôle d'étanchéité.

Par ailleurs, Les rainures 54 peuvent être situées sur la paroi intérieure 51 de la lèvre extérieure 27 afin de jouer le rôle de conduits de régulation de la pression entre les lèvres.

## Revendications

1. Maître cylindre de frein (1) comportant
- un piston (4) coulissant dans un alésage (3) d'un corps (2) de maître cylindre,
- le corps de maître cylindre (2) comportant une arrivée (17) de fluide hydraulique dans une chambre (13), et
- un joint (21) d'étanchéité lisse ayant une forme circulaire et une profil en U,
- le profil en U étant formé par une lèvre intérieure (28) et une lèvre extérieure (27) du joint d'étanchéité
- le joint d'étanchéité (21) étant en contact par la lèvre intérieure (28) avec la périphérie du piston (4), et par la lèvre extérieure (27) avec le corps (2) du maître cylindre (1),
**caractérisé en ce qu'**il comporte
- des reliefs (42) qui sont localisés et réalisés sur une lèvre intérieure en regard de l'autre lèvre et par couple et que ledit relief (42) est espacé d'un écart (47) égal à deux fois la hauteur (48) de la lèvre intérieure (28), mesurée parallèlement à un axe (7) de déplacement du piston (4).

2. Maître cylindre selon la revendication 1 **caractérisé en ce que** des reliefs (42) sont protubérants.

3. Maître cylindre selon l'une des revendications 1 à 2, **caractérisé en ce que** des reliefs (42) sont creux.

4. Maître cylindre selon l'une des revendications 1 à 3 **caractérisé en ce que** des reliefs (42) sont situés sur le chant de la lèvre.

5. Maître cylindre selon l'une des revendications 1 à 4 **caractérisé en ce que** des reliefs (42) sont continus du chant de la lèvre à une paroi de la lèvre, intérieure ou extérieure, en regard de l'autre lèvre.

6. Maître cylindre selon l'une des revendications 1 à 5 **caractérisé en ce que** des reliefs (42) sont situés sur la lèvre extérieure (27).

7. Maître cylindre selon l'une des revendications 1 à 6 **caractérisé en ce que** des reliefs (42) sont répartis en groupements.

## Claims

1. Brake master cylinder (1) comprising
- a piston (4) sliding in a bore (3) of a master cylinder body (2),
- the master cylinder body (2) comprises an inlet (17) allowing hydraulic fluid to enter a chamber (13), and
- a smooth seal (21) of circular shape with a U-shaped profile,
- the U-shaped profile being formed by an inner lip (28) and an outer lip (27) of the seal,
- the seal (21) being in contact via the inner lip (28) with the periphery of the piston (4), and via the outer lip (27) with the body (2) of the master cylinder (1),
**characterized in that** it comprises
- reliefs (42) which are localized and produced on one inner lip facing outer lip and positioned in pairs and **in that** said reliefs (42) are spaced apart by a spacing (47) equal to twice the height (48) of the inner lip (28) and measured parallel to an axis (7) of movement of the piston (4).

2. Master cylinder according to Claim 1, **characterized in that** the reliefs (42) are protruding reliefs.

3. Master cylinder according to one of Claims 1 and 2, **characterized in that** some reliefs (42) are hollow.

4. Master cylinder according to one of Claims 1 to 3, **characterized in that** some reliefs (42) are situated on the edge face of the lip.

5. Master cylinder according to one of Claims 1 to 4, **characterized in that** some reliefs (42) are continuous from the edge face of the lip to one wall of the lip, the inner or outer wall, that faces the other lip.

6. Master cylinder according to one of Claims 1 to 5, **characterized in that** some reliefs (42) are situated on the outer lip (27).

7. Master cylinder according to one of Claims 1 to 6, **characterized in that** some reliefs (42) are arranged in groups.

## Patentansprüche

1. Hauptbremszylinder (1), mit
- einem Kolben (4), der in einer Bohrung (3) eines Hauptzylinderkörpers (2) gleitet,
- wobei der Hauptzylinderkörper (2) einen Einlass (17) für Hydraulikfluid in eine Kammer (13) aufweist, und
- einer glatten Dichtung (21), die kreisförmig ist und ein U-förmiges Profil aufweist,
- wobei das U-förmige Profil durch eine Innenlippe (28) und eine Außenlippe (27) der Dichtung gebildet ist,
- wobei die Dichtung (21) über die Innenlippe (28) den Umfang des Kolbens (4) und über die Außenlippe (27) den Körper (2) des Hauptzylinders (1) berührt,
**dadurch gekennzeichnet, dass** er folgendes aufweist
- erhöhte Abschnitte (42), die paarweise an einer Innenlippe gegenüber der anderen Lippe angeordnet und ausgebildet sind, wobei der erhöhte Abschnitt (42) mit einem Abstand (47) beabstandet ist, der parallel zu einer Verlagerungsachse (7) des Kolbens (4) gemessen der doppelten Höhe (48) der Innenlippe (28) entspricht.

2. Hauptzylinder nach Anspruch 1, **dadurch gekennzeichnet, dass** erhöhte Abschnitte (42) vorstehend sind.

3. Hauptzylinder nach einem der Ansprüche 1 bis 2, **dadurch gekennzeichnet, dass** erhöhte Abschnitte (42) ausgespart sind.

4. Hauptzylinder nach einem der Ansprüche 1 bis 3, **dadurch gekennzeichnet, dass** erhöhte Abschnitte (42) auf der Kante der Lippe angeordnet sind.

5. Hauptzylinder nach einem der Ansprüche 1 bis 4, **dadurch gekennzeichnet, dass** erhöhte Abschnitte (42) an einer Wand der Innenlippe oder Außenlippe, die der der anderen Lippe gegenüberliegt, durchgehend mit der Kante der Lippe ausgeführt sind.

6. Hauptzylinder nach einem der Ansprüche 1 bis 5, **dadurch gekennzeichnet, dass** erhöhte Abschnitte (42) auf der Außenlippe (27) angeordnet sind.

7. Hauptzylinder nach einem der Ansprüche 1 bis 6, **dadurch gekennzeichnet, dass** erhöhte Abschnitte (42) gruppenweise verteilt sind.
